# EUROPEAN PATENT APPLICATION

(11) **EP 2 237 612 A1**
(43) Date of publication of application: **06.10.2010**
(21) Application number: 10002965.1
(22) Date of filing: 19.03.2010
(51) Int. Cl.: H04W 40/00, H04W 92/20

(54) **Communicating data via a mesh network of interconnected femtocells**

(30) Priority: 31.03.2009 US 415811
(71) Applicant: Broadcom Corporation, Irvine, CA 92617 (US)
(72) Inventor: Erceg, Vinko, 92007 Cardiff CA (US); Abraham, Charles, 95033 Los Gatos CA (US); Chen, Xuemin c/o Broadcom Corporation, Irvine, CA 92617 (US); Diab, Wael William, 94109 San Francisco CA (US); Hou, Victor, 92037 La Jolla CA (US); Karaoguz, Jeyhan, 92606 Irvine CA (US); Kent, Mark, 92081 Vista CA (US)
(74) Representative: Jehle, Volker Armin

(57) **Abstract**

Aspects of a method and system for communicating data via a mesh network of interconnected femtocells are provided. In this regard, a plurality of femtocells and/or base stations may be interconnected to form a mesh network. A cellular enabled communication device may be enabled to communicate data to a first of the plurality of interconnected femtocells. The data may be routed by one or more other of the plurality of interconnected femtocells within the mesh network via one or more dynamically determined routes. The one or more dynamically determined routes may be determined based on one or more of a type of the communicated data, a quality of service (QoS) requested by the cellular enabled communication device for communicating the data and/or a cost associated with the routing of the data by the one or more other of the plurality of interconnected femtocells within the mesh network.

## Description

### CROSS-REFERENCE TO RELATED APPLICATIONS/INCORPORATION BY

### REFERENCE

Not Applicable

### FIELD OF THE INVENTION

Certain embodiments of the invention relate to communications. More specifically, certain embodiments of the invention relate to a method and system for communicating data via a mesh network of interconnected femtocells.

### BACKGROUND OF THE INVENTION

A femtocell is a small base station that may be placed in a customer's residence or in a small business environment, for example. Femtocells may be utilized for off-loading macro radio network facilities, improving coverage locally in a cost-effective manner, and/or implementing home-zone services to increase revenue. Femtocells, like macro base stations, may be enabled to connect "standard" phones to a cellular provider's network by a physical broadband connection which may be a digital subscriber line (DSL) connection, fiber connection, and/or a cable connection, for example. Since the traffic between a customer's premises femtocell equipment and the operator's network may be traversing a public network, the traffic may be prone to various risks.

Communication between femtocells and one or more cellular provider's networks enables operation in private and public areas. The capacity of a femtocell may be adequate to address a typical family use model supporting two to four simultaneous voice calls and/or data, for example.

An important characteristic of femtocells is their ability to control access. In an open access scenario, any terminal and/or subscriber that may be subscribed to any cellular base station may be allowed to communicate with the femtocell. Accordingly, the femtocell usage may somewhat resemble that of a macrocellular system. In a closed access scenario, only a limited number of terminals and/or subscribers that may be subscribed to a given cellular base station may be allowed to communicate with the femtocell. In this regard, the cellular base station may be perceived as being deployed for private usage.

A regulatory issue with regard to femtocells is that they use licensed frequencies that radiate at a very low power in a controlled environment. It may be likely that they may not require a license from a local authority, as macrocellular base stations do. An additional regulatory issue may arise from the relationship between a femtocell operator and a broadband services operator. One possible scenario may include the broadband operator being unaware of the existence of a femtocell operator. Conversely, the broadband operator and femtocell operator may have an agreement or they may be the same operator, for example. Interference between femtocells may be an issue for femtocell deployments based on wideband technologies such as WCDMA or OFDM, for example, because initial operator deployments may use the same frequency for both the femtocell and the macrocellular networks or due to the proximity of femtocell base stations in dense urban areas

There are a plurality of design models for deployment and integration of femtocells, for example, an IP based radio network controller (RNC) node B (lu-b) interface, a session initiation protocol (SIP) based approach using an lu/A interface, use of unlicensed spectrum in a technique known as unlicensed mobile access (UMA) and/or use of IP multimedia subsystem (IMS) voice call continuity (VCC), for example.

In an lu-b model based femtocell deployment approach, femtocells may be fully integrated into the wireless carrier's network and may be treated like any other remote node in a network. The lu-b protocol may have a plurality of responsibilities, such as the management of common channels, common resources, and radio links along with configuration management, including cell configuration management, measurement handling and control, time division duplex (TDD) synchronization, and/or error reporting, for example. In lu-b configurations, mobile devices may access the network and its services via the Node B link, and femtocells may be treated as traditional base stations.

In a SIP based femtocell deployment approach, a SIP client, embedded in the femtocell may be enabled to utilize SIP to communicate with the SIP-enabled mobile switching center (MSC). The MSC may perform the operational translation between the IP SIP network and the traditional mobile network, for example.

In a UMA based femtocell deployment approach, a generic access network (GAN) may offer an alternative way to access GSM and GPRS core network services over broadband. To support this approach, a UMA Network Controller (UNC) and protocols that guarantee secure transport of signaling and user traffic over IP may be utilized. The UNC may be enabled to interface into a core network via existing 3GPP interfaces, for example, to support core network integration of femtocell based services by delivering a standards based, scalable IP interface for mobile core networks.

In an IMS VCC based femtocell deployment approach, VCC may provide for a network design that may extend an IMS network to include cellular coverage and address the handoff process. The IMS VCC may be designed to provide seamless call continuity between cellular networks and any network that supports VoIP, for example. The VCC may also provide for interoperability between GSM, UMTS, and CDMA cellular networks and any IP capable wireless access network, for example. The IMS VCC may also support the use of a single phone number or SIP identity and may offer a broad collection of functional advantages, for example, support for multiple markets and market segments, provisioning of enhanced IMS multimedia services, including greater service personalization and control, seamless handoff between circuit-switched and IMS networks, and/or access to services from any IP device.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for communicating data via a mesh network of interconnected femtocells, substantially as shown in and/or described in connection with at least one of the figures, as set forth more completely in the claims.

According to an aspect, a method for communicating data comprises:
in a mesh network comprising a plurality of interconnected femtocells, communicating data from a cellular enabled communication device to a first of said plurality of interconnected femtocells, wherein said data is routed by one or more other of said plurality of interconnected femtocells within said mesh network via one or more dynamically determined routes.

Advantageously, the method further comprises determining said one or more dynamically determined routes based on one or both of: a type of said communicated data and/or a quality of service (QoS) requested by said cellular enabled communication device for said communication of said data.

Advantageously, the method further comprises determining said one or more dynamically determined routes based on a cost associated with said routing of said data by said one or more other of said plurality of interconnected femtocells within said mesh network.

Advantageously, the method further comprises communicating said received data from said cellular enabled communication device to said first of said plurality of interconnected femtocells via a wireless link.

Advantageously, the method further comprises determining said one or more dynamically determined routes based on a bandwidth associated with said wireless link.

Advantageously, said wireless link communicates said received data wirelessly utilizing one or more standards comprising IS-95, CDMA, GSM, TDMA, GPRS, EDGE, UMTS, WCDMA, OFDM, TD-SCDMA and/or HSDPA cellular standards.

Advantageously, said mesh network comprises one or more base stations enabled to communicate with said plurality of interconnected femtocells.

According to an aspect, a system for communicating data comprises:
one or more processors in a cellular enabled communication device operable to communicate data to a first of a plurality of interconnected femtocells in a mesh network, wherein said data is routed by one or more other of said plurality of interconnected femtocells within said mesh network via one or more dynamically determined routes.

Advantageously, said one or more processors is operable to determine said one or more dynamically determined routes based on one or both of: a type of said communicated data and/or a quality of service (QoS) requested by said cellular enabled communication device for said communication of said data.

Advantageously, said one or more processors is operable to determine said one or more dynamically determined routes based on a cost associated with said routing of said data by said one or more other of said plurality of interconnected femtocells within said mesh network.

Advantageously, said one or more processors is operable to communicate said received data from said cellular enabled communication device to said first of said plurality of interconnected femtocells via a wireless link.

Advantageously, said one or more processors is operable to determine said one or more dynamically determined routes based on a bandwidth associated with said wireless link.

Advantageously, said wireless link communicates said received data wirelessly utilizing one or more standards comprising IS-95, CDMA, GSM, TDMA, GPRS, EDGE, UMTS, WCDMA, OFDM, TD-SCDMA and/or HSDPA cellular standards.

Advantageously, said data is routed by said one or more other of said plurality of interconnected femtocells and/or one or more base stations within said mesh network via said one or more dynamically determined routes.

According to an aspect, a method for communicating data comprises:
dynamically determining one or more routes among a plurality of interconnected femtocells and/or base stations in a mesh network for routing received data; and
communicating said received data from a first of said plurality of interconnected femtocells to one or more other of said plurality of interconnected femtocells within said mesh network via said one or more dynamically determined routes, wherein said data is received from a cellular enabled communication device.

Advantageously, the method further comprises communicating said received data from said first of said plurality of interconnected femtocells to said one or more other of said plurality of interconnected femtocells within a first coverage area of said first of said plurality of interconnected femtocells along said one or more dynamically determined routes.

Advantageously, the method further comprises communicating said received data from said one or more other of said plurality of interconnected femtocells to a target when said target is within a coverage area of said one or more other of said plurality of interconnected femtocells.

Advantageously, the method further comprises communicating said received data from said one or more other of said plurality of interconnected femtocells to another neighboring femtocell in said mesh network along said one or more dynamically determined routes when said target is not within said coverage area of said one or more other of said plurality of interconnected femtocells.

Advantageously, said target is one or both of: another cellular enabled communication device and/or another femtocell in said mesh network.

Advantageously, the method further comprises communicating said received data from said first of said plurality of interconnected femtocells to said one or more other of said plurality of interconnected femtocells via a wireless link.

Advantageously, the method further comprises detecting each of said one or more other of said plurality of interconnected femtocells in said mesh network without communicating with a base station.

Advantageously, the method further comprises dynamically re-routing said received data at each of said one or more other of said plurality of interconnected femtocells in said mesh network when said one or more other of said plurality of interconnected femtocells along said one or more dynamically determined routes is not functioning.

Advantageously, the method further comprises dynamically re-routing said received data at each of said one or more other of said plurality of interconnected femtocells in said mesh network when one or more wireless links coupling said one or more other of said plurality of interconnected femtocells along said one or more dynamically determined routes is not functioning.

According to an aspect, a system for communicating data comprises:
one or more processors for use in a first of a plurality of interconnected femtocells in a mesh network, wherein said one or more processors is operable to dynamically determine one or more routes among said plurality of interconnected femtocells in said mesh network for routing received data; and
said one or more processors operable to communicate said received data from said first of said plurality of interconnected femtocells to one or more other of said plurality of interconnected femtocells and/or base stations within said mesh network via said one or more dynamically determined routes, wherein said data is received from a cellular enabled communication device.

Advantageously, said one or more processors is operable to communicate said received data from said first of said plurality of interconnected femtocells to said one or more other of said plurality of interconnected femtocells within a first coverage area of said first of said plurality of interconnected femtocells along said one or more dynamically determined routes.

Advantageously, said one or more processors is operable to communicate said received data from said one or more other of said plurality of interconnected femtocells to a target when said target is within a coverage area of said one or more other of said plurality of interconnected femtocells.

Advantageously, said one or more processors is operable to communicate said received data from said one or more other of said plurality of interconnected femtocells to another neighboring femtocell in said mesh network along said one or more dynamically determined routes when said target is not within said coverage area of said one or more other of said plurality of interconnected femtocells.

Advantageously, said target is one or both of: another cellular enabled communication device and/or another femtocell in said mesh network.

Advantageously, said one or more processors is operable to communicate said received data from said first of said plurality of interconnected femtocells to said one or more other of said plurality of interconnected femtocells via a wireless link.

Advantageously, said one or more processors is operable to detect each of said one or more other of said plurality of interconnected femtocells in said mesh network without communicating with a base station.

Advantageously, said one or more processors is operable to dynamically re-route said received data at each of said one or more other of said plurality of interconnected femtocells in said mesh network when said one or more other of said plurality of interconnected femtocells along said one or more dynamically determined routes is not functioning.

Advantageously, said one or more processors is operable to dynamically re-route said received data at each of said one or more other of said plurality of interconnected femtocells in said mesh network when one or more wireless links coupling said one or more other of said plurality of interconnected femtocells along said one or more dynamically determined routes is not functioning.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a diagram illustrating an exemplary cellular network, in accordance with an embodiment of the invention.

FIG. 1B is a diagram illustrating communication with a cellular network comprising a femtocell, in accordance with an embodiment of the invention.

FIG. 1C is a block diagram of an exemplary femtocell, in accordance with an embodiment of the invention.

FIG. 2 is a diagram illustrating communication of data via a mesh network of interconnected femtocells, in accordance with an embodiment of the invention.

FIG. 3 is a flow chart illustrating exemplary steps for creating a mesh network of interconnected femtocells, in accordance with an embodiment of the invention.

FIG. 4 is a flow chart illustrating exemplary steps for communicating data via a mesh network of interconnected femtocells, in accordance with an embodiment of the invention.

FIG. 5 is a flow chart illustrating exemplary steps for communicating data from a cellular enabled communication device via a mesh network of interconnected femtocells, in accordance with an embodiment of the invention.

### DETAILED DESCRIPTION OF THE INVENTION

Certain embodiments of the invention may be found in a method and system for communicating data via a mesh network of interconnected femtocells. In various exemplary embodiments of the invention, a plurality of femtocells and/or base stations may be interconnected to form a mesh network. A cellular enabled communication device may be operable to communicate data to a first of the plurality of interconnected femtocells. The data may be routed by one or more other of the plurality of interconnected femtocells within the mesh network via one or more dynamically determined routes. The one or more dynamically determined routes may be determined based on one or more of a type of the communicated data, a quality of service (QoS) requested by the cellular enabled communication device for communicating the data and/or a cost associated with the routing of the data by the one or more other of the plurality of interconnected femtocells within the mesh network.

In accordance with another embodiment of the invention, a first femtocell within the mesh network may be operable to receive data to be communicated from a source. A route within the mesh network may be determined to communicate the received data from the source to a target based on a dynamic routing algorithm. The received data may be communicated from the first femtocell to one or more neighboring femtocells within a first coverage area of the first femtocell along the determined route. The received data may be communicated from the one or more neighboring femtocells to the target when the target is within the coverage area of the one or more neighboring femtocells.

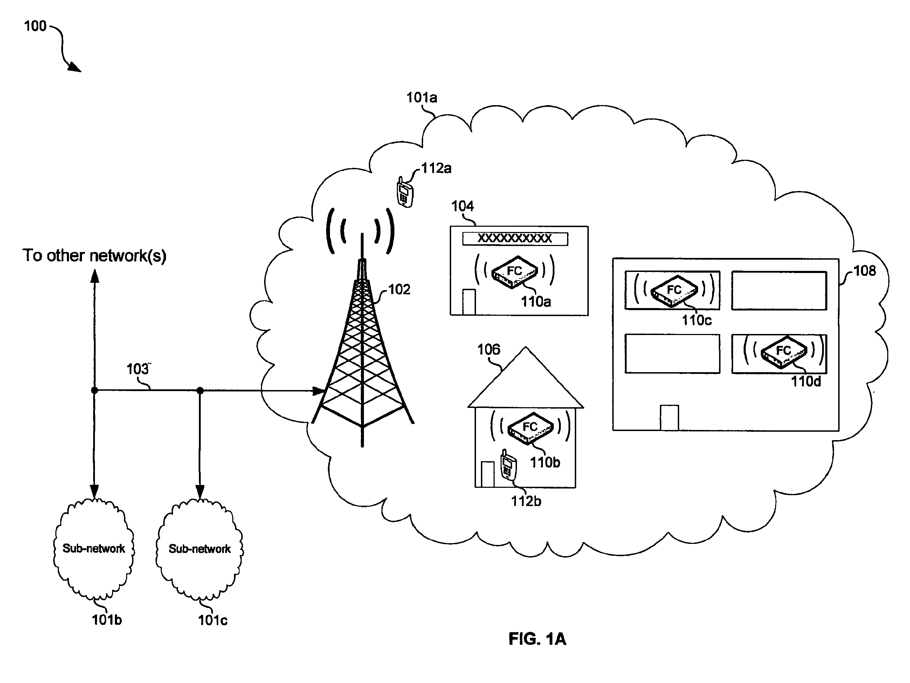

FIG. 1A is a diagram illustrating an exemplary cellular network, in accordance with an embodiment of the invention. Referring to FIG. 1A, there is shown a cellular network 100 comprising sub-networks 101a, 101b and 101c. The exemplary sub-network 101 a may comprise a base station 102, femtocells 110a, 110b, 110c and 110d, which are collectively referred to herein as femtocells 110, and cellular enabled communication devices 112a and 112b, which are collectively referred to herein as cellular enabled communication devices 112. The femtocells 110 may be installed in one or more commercial properties 104, one or more residential properties 106, and/or one or more multi-tenant properties 108.

The commercial properties 104 may comprise, for example, stores, restaurants, offices, and municipal buildings. The residential properties 106 may comprise, for example, single-family homes, home offices, and/or town-houses. Multi-tenant properties 108 may comprise residential and/or commercial tenants such as apartments, condos, hotels, and/or high rises.

The base station 102 may be operable to communicate data wirelessly utilizing one or more cellular standards such as IS-95, CDMA, GSM, TDMA, GPRS, EDGE, UMTS/WCDMA, TD-SCDMA, HSDPA, extensions thereto, and/or variants thereof. Notwithstanding, the invention may not be so limited, and the base station 102 may be operable to communicate data to the plurality of femtocells via a wired network, for example, a digital subscriber line (DSL) connection, fiber connection, and/or a cable connection without limiting the scope of the invention. "Data," as utilized herein, may refer to any analog and/or digital information including but not limited to voice, Internet data, and/or multimedia content. Multimedia content may comprise audio and/or visual content comprising, video, still images, animated images, and/or textual content. The base station 102 may communicate with cellular enabled communication devices such as the cellular enabled communication devices 112. Exemplary cellular standards supported by the base station 102 may be specified in the International Mobile Telecomunnications-2000 (IMT-2000) standard and/or developed by the 3^{rd} generation partnership project (3GPP) and/or the 3^{rd} generation partnership project 2 (3GPP2). The base station 102 may communicate data amongst the various components of the sub-network 101a. Additionally, data communicated to and/or from the base station 102 may be communicated to sub-network 101 b, sub-network 101 c, and/or to one or more other networks (not shown) via one or more backhaul links 103. In this manner, data communicated to and/or from the base station 102 may be communicated to and/or from, other portions of the network 100 and/or other networks. Exemplary networks with which data may be communicated may comprise public switched telephone networks (PSTN) and/or IP networks such as the Internet or an intranet.

The femtocells 110 may each comprise suitable logic, circuitry, and/or code that may be operable to communicate wirelessly utilizing one or more cellular standards such as IS-95, CDMA, GSM, TDMA, GPRS, EDGE, UMTS/WCDMA, TD-SCDMA, HSDPA, extensions thereto, and/or variants thereof. In this regard, the femtocells 110 may each communicate with cellular enabled communication devices such as the cellular enabled communication devices 112. Exemplary cellular standards supported by the femtocells 110 may be specified in the International Mobile Telecomunnications-2000 (IMT-2000) standard and/or developed by the 3^{rd} generation partnership project (3GPP) and/or the 3^{rd} generation partnership project 2 (3GPP2). Additionally, the femtocells 110 may each comprise suitable logic, circuitry, and/or code that may be operable to communicate over an IP network (not shown in FIG. 1A).

The cellular enabled communication devices 112 may each comprise suitable logic, circuitry, and/or code that may be operable to communicate utilizing one or more cellular standards. In this regard, the cellular enabled communication devices 112 may each be operable to transmit and/or receive data via the cellular network 100. Exemplary cellular enabled communication devices may comprise laptop computers, mobile phones, and personal media players, for example. The cellular enabled communication devices 112 may be enabled to receive, process, and present multimedia content and may additionally be enabled run a network browser or other applications for providing Internet services to a user of the cellular enabled device 112.

In operation, the cellular enabled communication devices 112 may gain access to the cellular network 100 and/or to other communication networks via cellular communications with the base station 102 and the femtocells 110. In this regard, in instances that a reliable connection may be established between the base station 102 and a cellular enabled communication device 112, the data may be communicated between the cellular enabled communication device 112 and the base station 102. Alternatively, in instances that a reliable connection may be established between a femtocell 110 and a cellular enabled communication device 112, the data may be communicated between the cellular enabled communication device 112 and the femtocell 110. However, because of the finite number of cellular channels and limited availability and cost of licensing cellular frequencies, there may be a significant risk for interference between two or more of the femtocells 110 and/or between one or more femtocells 110 and the base station 102. Thus, owners and/or operators (owners/operators) of the femtocells 110 may desire and/or need a way to mitigate the cellular interference caused by the femtocells 110 in the cellular network 100.

In accordance with an embodiment of the invention, the plurality of femtocells, for example, femtocells 110a, 110b, 110c and 110d within the cellular sub-network 101 a and the base station 102 may be interconnected via a mesh topology, for example. The femtocell 110a may be enabled to receive data from a source, for example, the base station 102 or a cellular enabled communication device 112a and/or another femtocell, for example, femtocell 110b within a coverage area of the femtocell 110a. The femtocell 110a may be operable to determine a route within the cellular sub-network 101 a to communicate the received data from the source, for example, cellular enabled communication device 112a to a target, for example, cellular enabled communication device 112b and/or another femtocell, for example, femtocell 110b based on a dynamic routing algorithm.

The femtocell 110a may be operable to communicate the received data to one or more neighboring femtocells, for example, femtocell 110b within the coverage area of the femtocell 110a along the determined route. The one or more neighboring femtocells, for example, femtocell 110b may be operable to communicate the received data to the target, for example, the cellular enabled communication device 112b in instances where the target is within a coverage area of the neighboring femtocell 110b. The received data may be communicated between different femtocells via a wireless link. The wireless link may be enabled to communicate the received data wirelessly utilizing one or more of IS-95, CDMA, GSM, TDMA, GPRS, EDGE, UMTS, WCDMA, TD-SCDMA and/or HSDPA cellular standards.

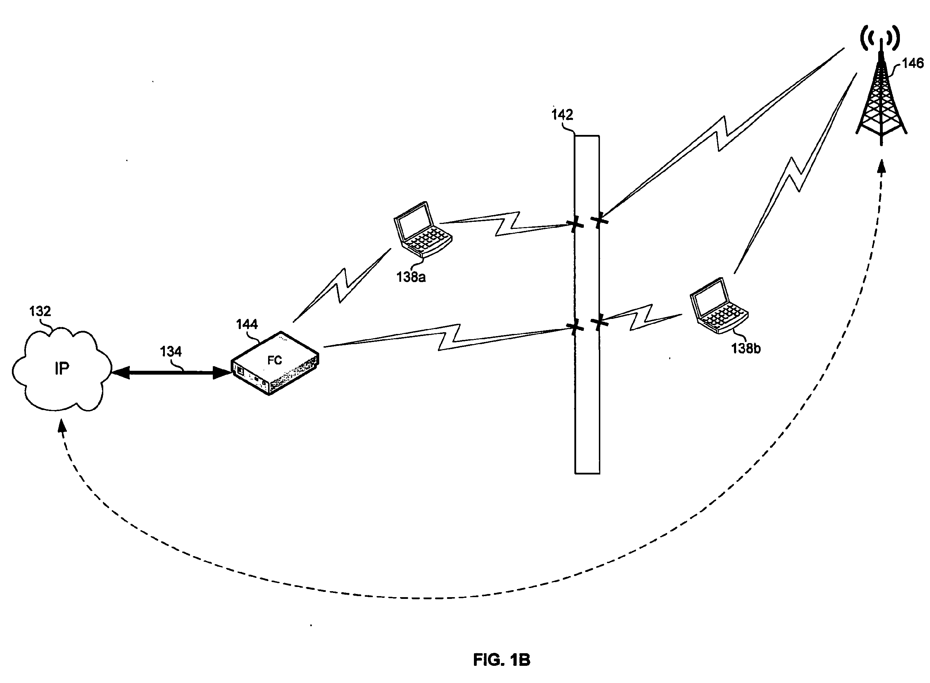

FIG. 1B is a diagram illustrating communication with a cellular network comprising a femtocell, in accordance with an embodiment of the invention. Referring to FIG. 1B, there is shown a femtocell 144, cellular enabled communication devices 138a and 138b, collectively referred to herein as cellular enabled communication devices 138, communication barrier 142, and base station 146. The femtocell 144 may be communicatively coupled to an IP network 132 via a link 134.

The base station 146 may be similar to or the same as the base station 102 described with respect to FIG. 1A, for example. The cellular enabled communication devices 138 may be similar to or the same as the cellular enabled communication devices 112 described with respect to FIG. 1A, for example. The femtocell 144 may be similar to or the same as the femtocells 110 described with respect to FIG. 1A, for example.

The IP network 132 may comprise one or more network devices and/or network links operable to transmit and/or receive IP packets. The IP network 132 may provide access to the Internet and/or one or more private networks.

The link 134 may comprise a broadband link such as a digital subscriber line (DSL), a T1/E1 line, a cable television infrastructure, a satellite television infrastructure, and/or a satellite broadband Internet link. The link 134 may comprise one or more optical, wired, and/or wireless links.

The communications barrier 142 may comprise an obstruction to cellular communications. In some instances, the barrier 142 may comprise a physical barrier such as a building or mountainous terrain, for example. In some instances, the barrier 142 may represent a distance which may be too great for reliable cellular communications. In some instances, the barrier 142 may represent interference or a limitation of channel capacity which may prevent cellular communications. The barrier 142 may prevent cellular communications between the base station 146 and the cellular enabled communication device 138a and may prevent cellular communications between the femtocell 144 and the cellular enabled communication device 138b.

In operation, the cellular enabled device 138a and the cellular enabled device 138b may communicate via the femtocell 144, the base station 146, and the IP network 132. For example, the cellular enabled device 138a may transmit data to the femtocell 144 utilizing one or more cellular standards. The femtocell 144 may packetize the data into one or more IP packets and the IP packets may be further encapsulated, encoded, modulated, or otherwise processed. The IP packets may then be routed via the IP network 132 to the base station 146. In some instances, the base station 146 may utilize IP backloading and the IP packets may be conveyed to the base station 146. In other instances, the IP packets may be transcoded via one or more network elements (not shown in FIG. 1 B) to a format supported by the base station 146. The data may then be extracted from the IP packets, transcoded to a format suitable for cellular transmission, and subsequently transmitted to the cellular enabled device 138b.

In this manner, the femtocell 144 may enable communication with the cellular enabled device 138a even in instances that the cellular enabled device 138a is unable to establish reliable cellular communications with a base station. Because the femtocell 144 and the base station 146 are separated by the barrier 142, they may operate on the same or closely spaced frequencies and/or channels without interfering with one another. However, if the barrier 142 were not present, interference may arise between the cellular signals from the femtocell 144 and the cellular signals from the base station 146. Accordingly, aspects of the invention may enable the femtocell 144 to characterize the environment in which it operates to enable detection of interference from the base station 146 or other sources and correspondingly adjusting a frequency and/or channel on which it operates. A new frequency and/or channel of operation of the femtocell 144 may be controlled to be spaced as far as possible from one or more frequencies and/or one or more channels utilized by the base station 146 and/or of one or more other neighboring femtocells and/or base stations.

Although, FIG. 1B describes communication between a pair of cellular enabled devices via a single femtocell and a base station, communication with other equipment via a plurality of interconnected femtocells and an IP network may be similar to the communication described with respect to FIG. 1B. In this regard, devices which may communicate via one or more femtocells may comprise cellular enabled devices in other sub-networks, cellular enabled devices in different cellular networks, conventional "landline" phones coupled to a PSTN, IP phones, and computing devices such as PCs and fileservers coupled to an IP network.

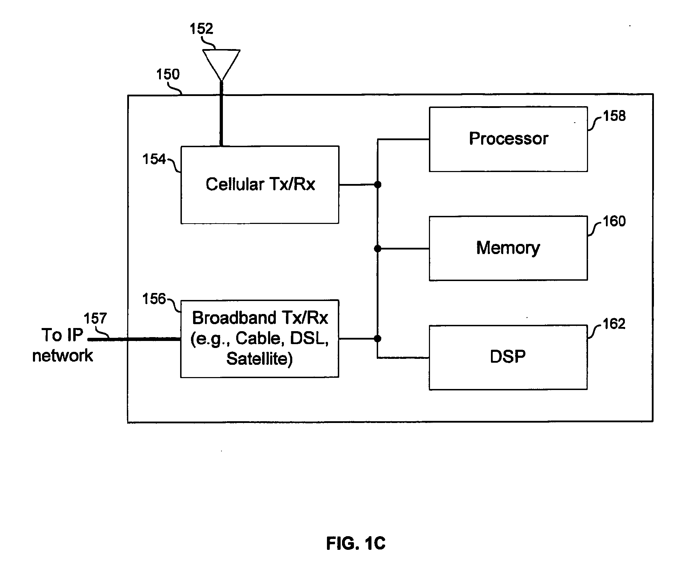

FIG. 1C is a block diagram of an exemplary femtocell, in accordance with an embodiment of the invention. Referring to FIG. 1C, there is shown a femtocell 150 comprising an antenna 152, a cellular transmitter and/or receiver (Tx/Rx) 154, a broadband transmitter and/or receiver (Tx/Rx) 156, a processor 158, a memory 160, and a digital signal processor (DSP) 162. The femtocell 150 may be similar to or the same as the femtocells 110 described with respect to FIG. 1B. The femtocell 150 may be part of a mesh network of interconnected femtocells.

The antenna 152 may be suitable for transmitting and/or receiving cellular signals. Although a single antenna is illustrated, the invention may not be so limited. In this regard, the cellular Tx/Rx 154 may utilize a common antenna for transmission and reception, or may utilize different antennas for transmission and reception, and/or may utilize a plurality of antennas for transmission and/or reception.

The cellular Tx/Rx 154 may comprise suitable logic circuitry and/or code that may be operable to transmit and/or receive voice and/or data utilizing one or more cellular standards. The cellular Tx/Rx 154 may be operable to perform amplification, down-conversion, filtering, demodulation, and analog to digital conversion of received cellular signals. The cellular Tx/Rx 154 may be operable to perform amplification, up-conversion, filtering, modulation, and digital to analog conversion of transmitted cellular signals. The cellular Tx/Rx 154 may support communication over a plurality of communication channels utilizing time division multiple access (TDMA), code division multiple access (CDMA) and/or orthogonal frequency division multiplexing (OFDM). Exemplary cellular standards supported by the femtocells 110 may be specified in the International Mobile Telecomunnications-2000 (IMT-2000) standard developed by the 3^{rd} generation partnership project (3GPP) and/or the 3^{rd} generation partnership project 2 (3GPP2). The cellular Tx/Rx 154 may be operable to transmit and/or receive on one or more frequencies and/or channels. One or more of the frequencies and/or one or more of the channels on which the cellular Tx/Rx 154 receives and/or transmits may be configured via one or more control signals from the processor 158, memory 160, and/or the DSP 162. The cellular Tx/Rx 154 may also comprise a processor that may be enabled to measure the received signal strength for characterizing an environment in which the femtocell 150 resides.

The broadband Tx/Rx 156 may comprise suitable logic, circuitry, and/or code that may be operable to transmit voice and/or data in adherence to one or more broadband standards. The broadband Tx/Rx 156 may be operable to perform amplification, down-conversion, filtering, demodulation, and analog to digital conversion of received signals. The broadband Tx/Rx 156 may be operable to perform amplification, up-conversion, filtering, modulation, and digital to analog conversion of transmitted signals. In various exemplary embodiments of the invention, the broadband Tx/Rx 156 may transmit and/or receive voice and/or data over the link 157 which may be a T1/E1 line, optical fiber, DSL, cable television infrastructure, satellite broadband internet connection, satellite television infrastructure, and/or Ethernet. In various exemplary embodiments of the invention, data received via the broadband Tx/Rx 156 may be conveyed to the processor 158, memory 160, and/or the DSP 162 and may be utilized to control one or more frequencies and/or channels on which the cellular Tx/Rx 154 transmits and/or receives.

The processor 158 may comprise suitable logic, circuitry, and/or code that may enable processing data and/or controlling operations of the femtocell 150. In this regard, the processor 158 may be enabled to provide control signals to the various other blocks comprising the femtocell 150. The processor 158 may also control data transfers between various portions of the femtocell 150. Additionally, the processor 158 may enable execution of applications programs and/or code. In various embodiments of the invention, the applications, programs, and/or code may enable, for example, parsing, transcoding, or otherwise processing data. In various embodiments of the invention, the applications, programs, and/or code may enable, for example, configuring or controlling operation of the cellular Tx/Rx 154, the broadband Tx/Rx 156, the DSP 162, and/or the memory 160. In various embodiments of the invention, the applications, programs, and/or code may enable detecting interference and/or controlling cellular one or more frequencies and/or one or more channels on which the cellular Tx/Rx 154 transmits and/or receives.

The processor 158 may be operable to receive data at the femtocell 150 within the mesh network from a source, for example, a base station 146, an IP network 132, a cellular enabled communication device 138a and/or another femtocell, for example, femtocell 110a within a coverage area of the femtocell 150. The processor 158 may be operable to determine a route within the mesh network to communicate the received data from the source, for example, IP network 132 to a target, for example, a cellular enabled communication device 138b based on a dynamic routing algorithm. The processor 158 may be operable to communicate the received data from the femtocell 150 to one or more neighboring femtocells within the coverage area of the femtocell 150 along the determined route. The processor 158 may be operable to communicate the received data from the one or more neighboring femtocells to the target, for example, the cellular enabled communication device 138b.

The memory 160 may comprise suitable logic, circuitry, and/or code that may enable storage or programming of information that includes parameters and/or code that may effectuate the operation of the femtocell 150. The parameters may comprise configuration data and the code may comprise operational code such as software and/or firmware, but the information need not be limited in this regard. Moreover, the parameters may include adaptive filter and/or block coefficients. Additionally, the memory 160 may buffer or otherwise store received data and/or data to be transmitted. In various embodiments of the invention, the memory 160 may comprise one or more look-up tables utilized for determining cellular devices within a coverage area of the femtocell 150. In various embodiments of the invention, the memory 160 may comprise one or more look-up tables or other data structures which may comprise information controlling one or more frequencies and/or one or more channels on which the cellular Tx/Rx 154 transmits and/or receives.

The DSP 162 may comprise suitable logic, circuitry, and/or code operable to process audio and/or video signals. In various embodiments of the invention, the DSP 162 may encode, decode, modulate, demodulate, encrypt, and/or decrypt voice and/or data signals. In this regard, the DSP 162 may be operable to perform computationally intensive processing of voice and/or data signals. In various embodiments of the invention, the DSP 162 may be operable to detect interference and/or control one or more frequencies and/or one or more channels on which the cellular Tx/Rx 154 transmits and/or receives. The DSP 162 may be operable to perform, for example, fast Fourier transform analysis (FFT) of received signals to characterize an environment in which the femtocell 150 resides.

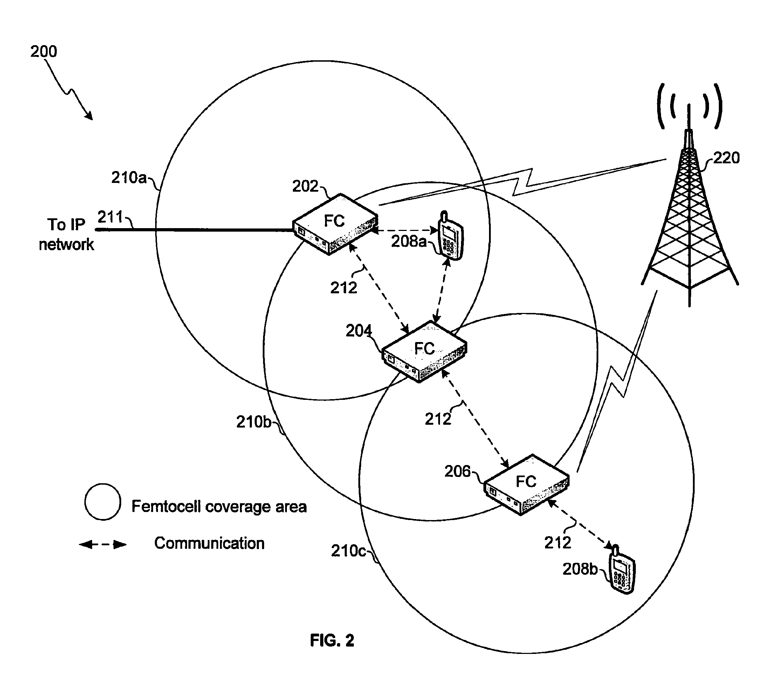

FIG. 2 is a diagram illustrating communication of data via a mesh network of interconnected femtocells, in accordance with an embodiment of the invention. Referring to FIG. 2, there is shown a mesh network 200. The mesh network 200 may comprise a base station 220, a plurality of femtocells 202, 204 and 206, and a plurality of cellular enabled communication devices 208a and 208b. The plurality of femtocells 202, 204 and 206, and the plurality of cellular enabled communication devices 208a and 208b may be communicatively coupled via wireless links 212. The base station 220 may be may be substantially as described in FIG. 1A. Each of the plurality of femtocells 202, 204 and 206 may be substantially as described in FIG. 1A, 1B and 1C. Each of the plurality of cellular enabled communication devices 208a and 208b may be substantially as described in FIG. 1A, 1B and 1C. Notwithstanding, the invention may not be so limited and the mesh network 200 may comprise other femtocells, cellular enabled communication devices and base stations, which are not shown in FIG. 2.

The femtocell 202 may be communicatively coupled to an IP network via a link 211. The IP network may comprise one or more network devices and/or network links operable to transmit and/or receive IP packets. The IP network may provide access to the Internet and/or one or more private networks. The link 211 may comprise a broadband link such as a digital subscriber line (DSL), a T1/E1 line, a cable television infrastructure, a satellite television infrastructure, and/or a satellite broadband Internet link. The link 211 may comprise one or more optical, wired, and/or wireless links.

In accordance with an embodiment of the invention, the plurality of femtocells 202, 204 and 206 may be communicatively coupled to each other based on a mesh topology, for example. Each of the plurality of femtocells 202, 204 and 206 may be a node in the mesh network 200. Each of the plurality of femtocells 202, 204 and 206 may be operable to communicate with other femtocells, base stations and/or cellular enabled communication devices within a particular coverage area via a wireless link 212. The wireless link 212 may be enabled to communicate data wirelessly utilizing one or more cellular standards such as IS-95, CDMA, GSM, TDMA, GPRS, EDGE, UMTS/WCDMA, TD-SCDMA, HSDPA, extensions thereto, and/or variants thereof. For example, femtocell 202 may be operable to communicate with other femtocells, base stations and/or cellular enabled communication devices within a femtocell coverage area 210a. Similarly, femtocell 204 may be operable to communicate with other femtocells, base stations and/or cellular enabled communication devices within a femtocell coverage area 210b and femtocell 206 may be operable to communicate with other femtocells, base stations and/or cellular enabled communication devices within a femtocell coverage area 210c.

Accordingly, each femtocell may be placed within a femtocell coverage area of the neighboring femtocells in the mesh network 200. For example, femtocell 202 may be placed within the femtocell coverage area 210b of the neighboring femtocell 204. In an exemplary embodiment of the invention, the femtocell 202 may be placed on the outer boundary of the femtocell coverage area 210b of the neighboring femtocell 204. Similarly, the femtocell 204 may be placed within the femtocell coverage area 210a of neighboring femtocell 202 and within the femtocell coverage area 210c of the neighboring femtocell 206. In an exemplary embodiment of the invention, the femtocell 204 may be placed on the outer boundaries of the femtocell coverage area 210a of the neighboring femtocell 202 and the femtocell coverage area 210c of neighboring femtocell 206. In an exemplary embodiment of the invention, the femtocell 204 may be placed at the intersection of the femtocell coverage area 210a of neighboring femtocell 202 and the femtocell coverage area 210c of neighboring femtocell 206. Similarly, femtocell 206 may be placed within the femtocell coverage area 210b of neighboring femtocell 204. In an exemplary embodiment of the invention, the femtocell 206 may be placed on the outer boundary of the femtocell coverage area 210b of neighboring femtocell 204.

In accordance with an embodiment of the invention, the cellular enabled communication device 208a may be located within the femtocell coverage area 210a of femtocell 202 and within the femtocell coverage area 210b of femtocell 204, for example. The cellular enabled communication device 208b may be located within the femtocell coverage area 210c of femtocell 206, for example. Notwithstanding, the invention may not be so limited and the cellular enabled communication devices 208a and 208b may be located in other locations within the mesh network 200 without limiting the scope of the invention.

In operation, the cellular enabled communication devices 208a and 208b may gain access to the cellular network 100 and/or to other communication networks via cellular communications with the base station 220 and the femtocells 202, 204 and 206. In this regard, in instances that a reliable connection may be established between the base station 220 and a cellular enabled communication device, for example, 208a, data may be communicated between the cellular enabled communication device 208a and the base station 220. Alternatively, in instances that a reliable connection may be established between a femtocell, for example, femtocell 202 and a cellular enabled communication device, for example, 208a, data may be communicated between the cellular enabled communication device 208a and the femtocell 202.

In accordance with an embodiment of the invention, the cellular enabled communication device 208b may be enabled to communicate data to a first of the plurality of interconnected femtocells, for example, the femtocell 202. The data may be routed by one or more other of the plurality of interconnected femtocells, for example, the femtocells 206 and 204 within the mesh network 200 via one or more dynamically determined routes. The one or more dynamically determined routes may be determined based on a type of the communicated data, for example, audio data, video data and/or information, which is to be or is being communicated. The one or more dynamically determined routes may also be determined based on a quality of service (QoS) requested by the cellular enabled communication device 208b for communicating the data. For example, in instances where the cellular enabled communication device 208b requests a high QoS for communicating the data, the cellular enabled communication device 208b may be enabled to select one of the dynamically determined routes for communicating the data. On the other hand, in instances where the cellular enabled communication device 208b requests a low QoS for communicating the data, the cellular enabled communication device 208b may be enabled to select another of the dynamically determined routes for communicating the data.

The one or more dynamically determined routes may also be determined based on a cost associated with the routing of the data by the one or more other of the plurality of interconnected femtocells, for example, the femtocells 206 and 204 within the mesh network 200. For example, the cellular enabled communication device 208b may be enabled to take into account the cost associated with the routing of the data, the desired QoS for communicating the data, the type of data to be communicated and/or a bandwidth associated with a wireless link for communicating the data and accordingly select one of the dynamically determined routes for routing the data to the first of the plurality of interconnected femtocells, for example, femtocell 202.

The mesh network 200 may enable the plurality of femtocells 202, 204 and 206 to route data, voice and/or instructions between each other and between the plurality of femtocells 202, 204 and 206 and base station 220, and/or cellular enabled communication devices 208a and 208b. The mesh network 200 may enable continuous connections and/or reconfiguration around broken or blocked paths between the plurality of femtocells 202, 204 and 206 by hopping from node to node, or femtocell to femtocell, until a destination is reached, for example. In one embodiment of the invention, the mesh network 200 may be fully connected network, where each of the plurality of femtocells 202, 204 and 206 are communicatively coupled to each other.

In accordance with another embodiment of the invention, the mesh network 200 may have self-healing characteristics, for example. In other words, the mesh network 200 may be enabled to operate even when a particular femtocell is non-functional or a wireless link 212 between two femtocells is non-functional. Accordingly, the mesh network 200 may be reliable and offer redundancy. In instances where one or more femtocells and/or links between femtocells is non-functional, the mesh network 200 may be operable to re-route data, voice and/or instructions between two or more femtocells and the base station 220, and/or cellular enabled communication devices 208a and 208b dynamically via one or more intermediate femtocells.

In accordance with another embodiment of the invention, the mesh network 200 may be operable to increase the bandwidth, spectral efficiency and range of the network over a specific coverage area. For example, one or more intermediate nodes or femtocells in the mesh network 200 may be operable to boost the signal and cooperatively make decisions to route data based on their knowledge of the mesh network 200. Each of the plurality of femtocells 202, 204 and 206 may be operable as routers to transmit and/or receive data to/from neighboring femtocells.

In accordance with another embodiment of the invention, the mesh network 200 may be decentralized with no central server or centrally managed with a central server, for example. A dynamic routing algorithm may be implemented in each of the plurality of femtocells 202, 204 and 206 based on the coverage area of each femtocell. The femtocell 204 may be operable to transmit the received data from the femtocell 202 to the neighboring femtocell 206 within the femtocell coverage area 210b. The femtocell 206 may be operable to transmit the received data from the femtocell 204 to the cellular enabled communication device 208b within the femtocell coverage area 210c. Notwithstanding, the invention may not be so limited and other routes in the mesh network 200 may be utilized to transmit data from the femtocell 202 to the cellular enabled communication device 208b without limiting the scope of the invention. In accordance with another embodiment of the invention, each of the plurality of femtocells 202, 204 and 206 in the mesh network 200 may be operable to detect neighboring femtocells in the mesh network 200 without contacting the base station 220.

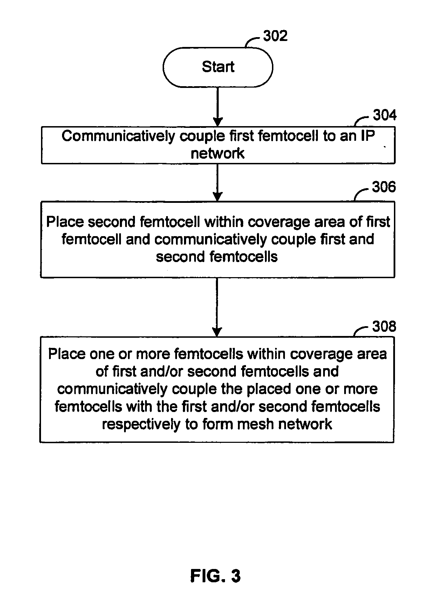

FIG. 3 is a flow chart illustrating exemplary steps for creating a mesh network of interconnected femtocells, in accordance with an embodiment of the invention. Referring to FIG. 3, exemplary steps may begin with step 302. In step 304, a first femtocell with a first femtocell coverage area may be communicatively coupled to an IP network. Notwithstanding, the invention may not be so limited, and the first femtocell may be communicatively coupled via a wired and/or wireless link to a base station and/or a satellite without limiting the scope of the invention. In step 306, a second femtocell with a second femtocell coverage area may be communicatively coupled to the first femtocell and placed within the first femtocell coverage area of the first femtocell. In step 308, one or more femtocells may be placed within the first femtocell coverage area and/or second femtocell coverage area and communicatively coupled with the first femtocell and/or second femtocell respectively to form a mesh network.

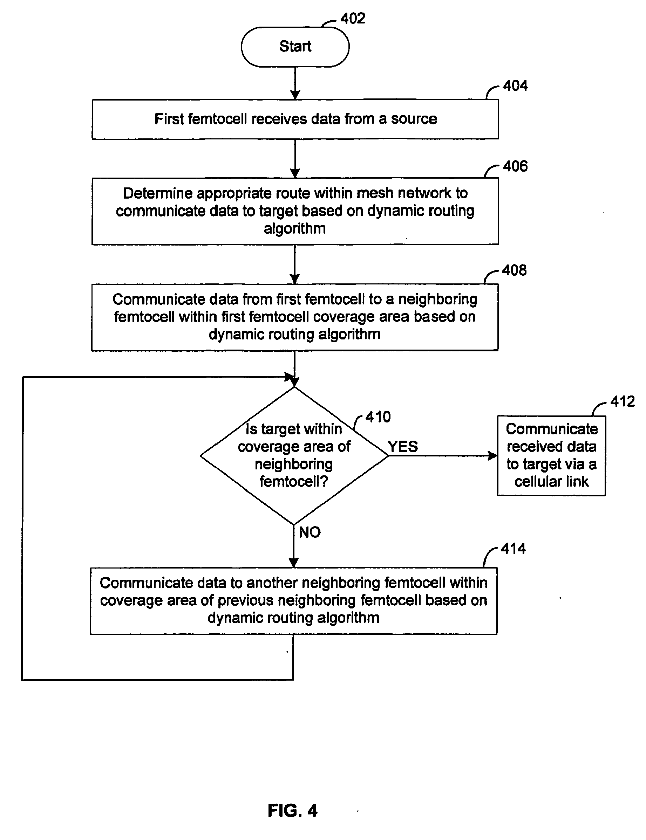

FIG. 4 is a flow chart illustrating exemplary steps for communicating data via a mesh network of interconnected femtocells, in accordance with an embodiment of the invention. Referring to FIG. 4, exemplary steps may begin with step 402. In step 404, a first femtocell with a first femtocell coverage area may receive data from a source. The source may be one or more of a base station, an IP network, a cellular enabled communication device and/or another femtocell within the first femtocell coverage area. In step 406, the first femtocell may determine an appropriate route in the mesh network to communicate the received data to a target based on a dynamic routing algorithm. The target may be one or more of another femtocell in the mesh network and/or a cellular enabled communication device. In step 408, the first femtocell may communicate the received data to a neighboring femtocell in the first femtocell coverage area via a wireless link coupling the first femtocell and the neighboring femtocell based on the dynamic routing algorithm.

In step 410, it may be determined whether the target is within the coverage area of the neighboring femtocell. In instances where the target is within the coverage area of the neighboring femtocell, control passes to step 412. In step 412, the neighboring femtocell may communicate the received data from the first femtocell to the target via a wireless link. The wireless link may be enabled to communicate data wirelessly utilizing one or more cellular standards such as IS-95, CDMA, GSM, TDMA, GPRS, EDGE, UMTS/WCDMA, TD-SCDMA, OFDM, HSDPA, extensions thereto, and/or variants thereof.

In instances where the target is not within the coverage area of the neighboring femtocell, control passes to step 414. In step 414, the neighboring femtocell may communicate the received data from the first femtocell to another neighboring femtocell in the coverage area of the previous neighboring femtocell via a wireless link coupling the previous neighboring femtocell and the next neighboring femtocell based on the dynamic routing algorithm. Control then returns to step 410. In step 410, it may be determined whether the target is within the coverage area of the current neighboring femtocell. In instances where the target is within the coverage area of the current neighboring femtocell, control passes to step 412. In step 412, the current neighboring femtocell may communicate the received data from the first femtocell to the target via a wireless link.

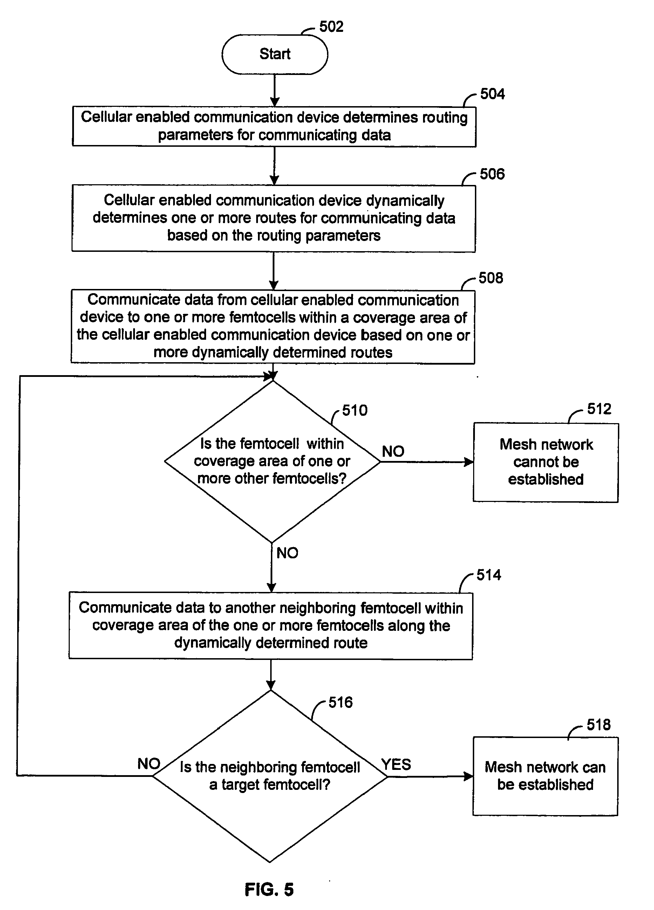

FIG. 5 is a flow chart illustrating exemplary steps for communicating data from a cellular enabled communication device via a mesh network of interconnected femtocells, in accordance with an embodiment of the invention. Referring to FIG. 5, exemplary steps may begin with step 502. In step 504, a cellular enabled communication device may determine one or more routing parameters associated with communicating the data to a first femtocell in a mesh network of interconnected femtocells and/or base stations. For example, the cellular enabled communication device may determine the cost associated with routing data, the desired QoS for communicating the data, the type of data to be and/or is being communicated, and/or a bandwidth associated with a wireless link for communicating the data to the first femtocell in a mesh network of interconnected femtocells. In step 506, the cellular enabled communication device may dynamically determine one or more routes for communicating the data based on the one or more routing parameters. In step 508, the data may be communicated to one or more femtocells in the mesh network within a coverage area of the cellular enabled communication device based on the one or more dynamically determined routes.

In step 510, it may be determined whether the first femtocell is within a coverage area of the one or more femtocells in the mesh network to which the cellular enabled communication device has communicated the data. In instances where the femtocell is not within the coverage area of the one or more femtocells in the mesh network, control passes to step 512. In step 512, the mesh network may not be established.

In instances where the first femtocell is within the coverage area of the one or more other femtocells in the mesh network, control passes to step 514. In step 514, the one or more femtocells in the mesh network may communicate the received data to another neighboring femtocell in the coverage area of the one or more femtocells in the mesh network along the one or more dynamically determined routes. In step 516, it may be determined whether the neighboring femtocell is the target femtocell. In instances where the neighboring femtocell is the target femtocell, control passes to step 518. In step 518, the mesh network may be established. In instances where the neighboring femtocell is not the target femtocell, control returns to step 510.

In accordance with an embodiment of the invention, a method and system for communicating data via a mesh network 200 of interconnected femtocells, for example, the femtocells 202, 204 and 206 and/or base stations, for example, base station 220 may comprise a cellular enabled communication device 208b that may be enabled to communicate data to a first of the plurality of interconnected femtocells, for example, the femtocell 202. The data may be routed by one or more other of the plurality of interconnected femtocells, for example, the femtocells 206 and 204 within the mesh network 200 via one or more dynamically determined routes. The one or more dynamically determined routes may be determined based on, for example, a type of the communicated data, a quality of service (QoS) requested by the cellular enabled communication device 208b for communicating the data and/or a cost associated with the routing of the data by the one or more other of the plurality of interconnected femtocells, for example, the femtocells 206 and 204 within the mesh network 200. The cellular enabled communication device 208b may be enabled to communicate the received data to the first of the plurality of interconnected femtocells, for example, femtocell 202 via a wireless link 212. The one or more dynamically determined routes may be determined based on a bandwidth associated with the wireless link 212.

In accordance with an embodiment of the invention, a method and system for communicating data via a mesh network 200 of interconnected femtocells, for example, the femtocells 202, 204 and 206 and/or base stations, for example, base station 220 may comprise one or more processors, for example, the processor 158 that may be operable to dynamically determine one or more routes among a plurality of interconnected femtocells in a mesh network 200 for routing received data. The received data may be communicated from a first of the plurality of interconnected femtocells, for example, the femtocell 202 to one or more other of the plurality of interconnected femtocells, for example, the femtocell 204 within the mesh network 200 via one or more dynamically determined routes. The data may be received from a cellular enabled communication device, for example, the cellular enabled communication device 208a.

In accordance with another embodiment of the invention, the data may be received at a first femtocell, for example, the femtocell 202 within the mesh network 200 from a source. The mesh network 200 may comprise a plurality of interconnected femtocells, for example, the femtocells 202, 204 and 206 and/or base stations, for example, base station 220. The source may be one or more of a base station 220, an IP network 132, a cellular enabled communication device 208a and/or another femtocell, for example, the femtocell 204 within a first coverage area 210a of the first femtocell 202. One or more processors, for example, the processor 158 may be operable to determine a route within the mesh network 200 over which to communicate the received data from the source, for example, the IP network 132 to a target based on a dynamic routing algorithm. The target may be one or more of another cellular enabled communication device 208b and/or another femtocell, for example, the femtocell 206 in the mesh network 200. One or more processors, for example, the processor 158 may be operable to communicate the received data from the first femtocell 202 to one or more neighboring femtocells, for example, the femtocell 204 within the first coverage area 210a of the first femtocell 202 along the determined route. One or more processors, for example, the processor 158 may be operable to communicate the received data from the one or more neighboring femtocells, for example, the femtocell 206 to the target, for example, the cellular enabled communication device 208b.

One or more processors, for example, processor 158 may be operable to determine whether the target, for example, the cellular enabled communication device 208b is within a coverage area 210b of one or more other of the plurality of interconnected femtocells, for example, the femtocell 204. One or more processors, for example, the processor 158 may be operable to communicate the received data from the one or more other of the plurality of interconnected femtocells, for example, the femtocell 206 to the target, for example, the cellular enabled communication device 208b, when the target, for example, the cellular enabled communication device 208b is within the coverage area 210c of one or more other of the plurality of interconnected femtocells, for example, the femtocell 206. One or more processors, for example, the processor 158 may be operable to communicate the received data from one or more other of the plurality of interconnected femtocells, for example, the femtocell 204 to another neighboring femtocell, for example, the femtocell 206 in the mesh network 200 along the one or more dynamically determined routes when the target, for example, the cellular enabled communication device 208b is not within the coverage area 210b of one or more other of the plurality of interconnected femtocells, for example, the femtocell 204.

One or more processors, for example, the processor 158 may be operable to communicate the received data from the first of the plurality of interconnected femtocells, for example, the femtocell 202 to one or more other of the plurality of interconnected femtocells, for example, the femtocell 204 and from one or more other of the plurality of interconnected femtocells, for example, femtocell 206 to the target, for example, the cellular enabled communication device 208b via a wireless link 212. The wireless link 212 may be enabled to communicate the received data wirelessly utilizing one or more exemplary standards comprising IS-95, CDMA, GSM, TDMA, GPRS, EDGE, UMTS, WCDMA, TD-SCDMA, OFDM, and/or HSDPA cellular standards. One or more processors, for example, the processor 158 may be operable to detect each of the one or more other of the plurality of interconnected femtocells, for example, the femtocells 204 and 206 in the mesh network 200 without communicating with a base station 220. One or more processors, for example, the processor 158 may be operable to dynamically re-route the received data at each of the one or more other of the plurality of interconnected femtocells, for example, the femtocells 204 and 206 in the mesh network 200 when one or more other of the plurality of interconnected femtocells, for example, the femtocell 204 along the one or more dynamically determined routes is non-functional. One or more processors, for example, the processor 158 may be operable to dynamically re-route the received data at each of the one or more other of the plurality of interconnected femtocells, for example, the femtocells 204 and 206 in the mesh network 200 when one or more wireless links 212 coupling the one or more other of the plurality of interconnected femtocells, for example, the femtocells 204 and 206 along the one or more dynamically determined routes is non-functional.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for communicating data via a mesh network of interconnected femtocells.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communicating data, the method comprising:
in a mesh network comprising a plurality of interconnected femtocells, communicating data from a cellular enabled communication device to a first of said plurality of interconnected femtocells, wherein said data is routed by one or more other of said plurality of interconnected femtocells within said mesh network via one or more dynamically determined routes.

2. The method according to claim 1, comprising determining said one or more dynamically determined routes based on one or both of: a type of said communicated data and/or a quality of service (QoS) requested by said cellular enabled communication device for said communication of said data.

3. The method according to claim 1, comprising determining said one or more dynamically determined routes based on a cost associated with said routing of said data by said one or more other of said plurality of interconnected femtocells within said mesh network.

4. The method according to claim 1, comprising communicating said received data from said cellular enabled communication device to said first of said plurality of interconnected femtocells via a wireless link.

5. The method according to claim 4, comprising determining said one or more dynamically determined routes based on a bandwidth associated with said wireless link.

6. A system for communicating data, the system comprising:
one or more processors in a cellular enabled communication device operable to communicate data to a first of a plurality of interconnected femtocells in a mesh network, wherein said data is routed by one or more other of said plurality of interconnected femtocells within said mesh network via one or more dynamically determined routes.

7. The system according to claim 6, wherein said one or more processors is operable to determine said one or more dynamically determined routes based on one or both of: a type of said communicated data and/or a quality of service (QoS) requested by said cellular enabled communication device for said communication of said data.

8. The system according to claim 6, wherein said one or more processors is operable to determine said one or more dynamically determined routes based on a cost associated with said routing of said data by said one or more other of said plurality of interconnected femtocells within said mesh network.

9. A method for communicating data, the method comprising:
dynamically determining one or more routes among a plurality of interconnected femtocells and/or base stations in a mesh network for routing received data; and
communicating said received data from a first of said plurality of interconnected femtocells to one or more other of said plurality of interconnected femtocells within said mesh network via said one or more dynamically determined routes, wherein said data is received from a cellular enabled communication device.

10. A system for communicating data, the system comprising:
one or more processors for use in a first of a plurality of interconnected femtocells in a mesh network, wherein said one or more processors is operable to dynamically determine one or more routes among said plurality of interconnected femtocells in said mesh network for routing received data; and
said one or more processors operable to communicate said received data from said first of said plurality of interconnected femtocells to one or more other of said plurality of interconnected femtocells and/or base stations within said mesh network via said one or more dynamically determined routes, wherein said data is received from a cellular enabled communication device.
